# EUROPEAN PATENT SPECIFICATION

(11) **EP 2 817 533 B1**
(45) Date of publication and mention of the grant of the patent: **07.08.2019**
(21) Application number: 13720021.8
(22) Date of filing: 20.02.2013
(51) Int. Cl.: F16F 15/134, F16F 15/133

(54) **IMPROVED DUAL MASS FLYWHEEL**
VERBESSERTES ZWEIMASSEN-SCHWUNGRAD
VOLANT À DOUBLE MASSE AMÉLIORÉ

(30) Priority: 20.02.2012 IT TO20120148
(43) Date of publication of application: 31.12.2014
(73) Proprietor: Dayco Europe S.R.L., Chieti (IT)
(72) Inventor: GIANSETTO, Giacomo, I-66100 Chieti (IT); MONTANI, Andrea, I-66010 Torre Vecchia Teatina (IT); CARICCIA, Gianluca, I-09170 Oristano (IT); DI GIACOMO, Tommaso, I-66010 S. Martino Sulla Marrucina (IT)
(74) Representative: Studio Torta S.p.A.
(86) International application number: PCT/IB2013/051390
(87) International publication number: WO 2013/124802

(56) References cited:
- EP-A2- 0 325 724
- DE-A1- 3 823 384
- DE-A1-102004 024 747
- DE-A1-102008 049 105
- DE-A1-102009 017 286
- US-A- 5 104 356

## Description

### TECHNICAL FIELD

The present invention relates to an improved dual mass flywheel having a decoupling resilient element and suitable for damping torsional vibrations of the crankshaft of an internal combustion engine of a vehicle and provide a decoupling function as well.

### BACKGROUND ART

A dual mass flywheel comprises a primary flywheel mass connected to a crankshaft of an internal combustion engine, a secondary flywheel mass connected to the input shaft of a gearbox of the vehicle and a decoupling element that is torsionally resilient and couples the primary flywheel mass with the secondary flywheel mass.

The decoupling element can comprise a plurality of circumferential compression compression coil springs torsionally connecting the primary flywheel mass with an intermediate spring loader, and a further resilient element to torsionally connect the spring loader to the secondary flywheel mass, the spring loader being rotatable with respect to the first and second flywheel mass and configured to transfer torsional load from springs attached to the primary flywheel mass to the springs attached to the secondary flywheel mass.

Furthermore, a damping device is provided to dampen vibrations during torsional resonances occurring, e.g. at starting when the engine speed ramps up through the first natural frequencies of the flywheel, e.g. at 200-400 rpm.

A primary issue in designing a flywheel is to efficiently provide the best compromise between a decoupling function aimed at avoiding that angular fluctuations from the crankshaft are transmitted to other components of a drivetrain, e.g. clutch, gearbox, differential etc. and a damping function vibrations during resonance, especially resonance through the first natural frequencies of the elements attached to the secondary flywheel mass, i.e. input shaft of the gearbox, secondary flywheel mass.

DE3823384 discloses a flywheel having a primary mass connected to a lower spring rate resilient unit and a secondary mass connected to a higher spring rate resilient unit, the lower and the higher resilient units being in series. Dynamic performances of such a layout can be improved.

### DISCLOSURE OF INVENTION

The scope of the present invention is to provide a dual mass flywheel aimed at satisfying at least partially the above specified need.

The scope of the present invention is achieved with a dual mass flywheel according to claim 1.

### BRIEF DESCRIPTION OF THE DRAWINGS

For a better understanding of the present invention, the latter will further be disclosed with reference to the accompanying figures in which:
- figure 1 is an exemplary schematic functional sketch of a dual mass flywheel which do not form part of the present invention;
- figure 2 is a graph of a damping torque applied within the flywheel of figure 1; and
- figure 3 is a schematic functional sketch of a dual mass flywheel according to the present invention.

### BEST MODE FOR CARRYING OUT THE INVENTION

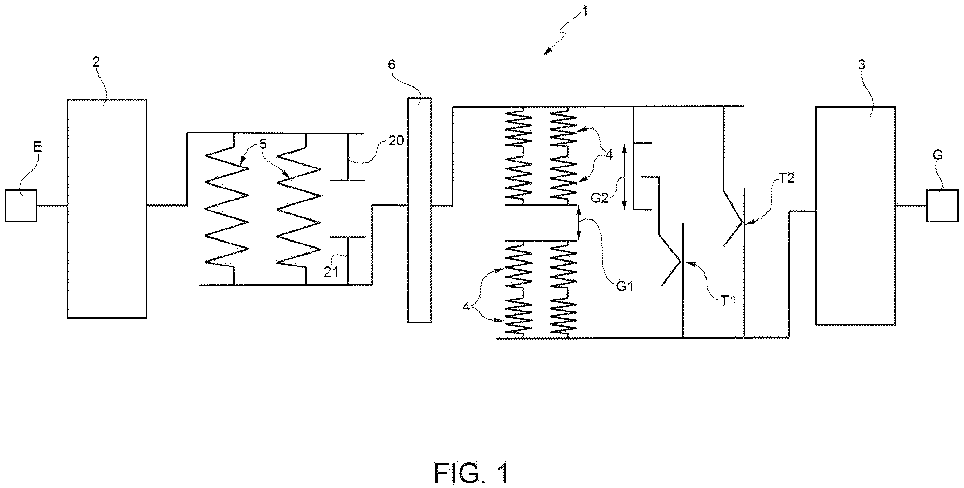

In figure 1, numeral 1 refers to an exemplary dual mass flywheel which do not form part of the present invention comprising a primary flywheel mass 2 preferably attached to a crankshaft of an internal combustion engine E, a secondary flywheel mass 3 preferably attached via a clutch to an input shaft of a gearbox G of a vehicle, a plurality of compression coil springs 4 circumferentially arranged to obtain a torsional action on secondary flywheel mass and a further torsionally resilient element 5 arranged in series between the primary mass flywheel and compression coil springs 4. Preferably, the gearbox is a continuously variable speed ratio gearbox and the internal combustion engine E is for use in a rear-wheel drive vehicle.

In particular, torsionally resilient element 5 is connected to compression coil springs 4 via a spring loader 6 having a non negligible mass with respect to primary and secondary mass flywheel. Spring loader 6 is an element or structure configured to transfer a torque from resilient element 5 to compression coil springs 4. Torsionally resilient element 5 is arranged so as to transmit a torque to the compression coil springs 4 via spring loader 6 when the primary flywheel mass 2 drives the secondary flywheel mass 3.

According to an alternative example, the resilient element 5 comprises a non-round cross section metal wire or band spiral spring having a first end portion 7 rigidly connected to the primary flywheel mass 2 and a second end portion 8 rigidly connected to spring loader 6.

As an alternative example, resilient element is a spiral spring having a number of volutes defined by an angle comprised between 250° and 600° and a height / width ratio of the cross section comprised between 0.4 and 0.8. In the present description and claims, a spiral spring comprises spires or portions of spires having a variable curvature and, therefore, a variable radius. Such variation may be either continuous or discontinuous. As an example, at least a portion of the spiral spring may be shaped as an Archimedes' spiral. Furthermore, the spires provide a radial gap to avoid direct contact. Alternatively, there might be two or more spiral springs arranged with an axial offset among each other.

As an alternative example, the cross section of resilient element 5 has a width comprised between 10mm and 30mm and a height comprised between 4mm and 12mm. Preferably, the resilient spring element 5 is made of a flat metal wire spring.

It has proven to be of a certain relevance to improve the performance over fatigue life that the fillet to connect planar faces of the resilient element 5 be comprised between 1mm and 3mm. Preferably, the cross section of resilient element 5 is substantially rectangular. The above features serve alone and, better, in combination to obtain the desired range of stiffness or spring rate to decouple the vibrations coming from the primary flywheel mass 2 and, at the same time, the desired fatigue life. Furthermore, the above geometrical ranges help alone or better in combination to obtain a ready-to-manufacture spring and have therefore a positive impact on manufacturing costs.

The resilient element 5 and the plurality of compression coil springs 4 are arranged in series between primary flywheel mass 2 and secondary flywheel mass 3, spring loader 6 being interposed between resilient element 5 and compression coil springs 4. According to the example, the maximum torsional stiffness of compression coil springs 4 measured when spring loader 6 angularly displaces with respect to secondary flywheel mass 3 is higher than the torsional stiffness of resilient element 5. The torsional stiffness of a compression coil spring is a conversion of the linear compression spring rate of a coil spring and depends also from the radial position of the spring within the flywheel.

Preferably, compression coil springs 4 are connected between spring loader 6 and secondary flywheels mass 3 so that a circumferential gap G1 is provided. Therefore, when spring loader 6 and secondary flywheel mass 3 relatively angularly displace, circumferential gap G1 shall be closed before compression coil springs 4 are compressed along the circumferential direction.

Furthermore, dual mass flywheel 1 comprises a damping device having a first unit T1 and a second unit T2. Preferably both damping units T1 and T2 are dry damping units.

Damping device is provided between spring loader 6 and secondary flywheel mass 3 and damping units T1, T2 are connected in parallel with respect to spring loader 6.

Preferably, damping unit T1 is configured so that a circumferential gap G2 is provided. Therefore, when spring loader 6 and secondary flywheel mass 3 relatively angularly displace, circumferential gap G2 shall be closed before damping unit T1 provides its angular damping action.

On the contrary, damping unit T2 is configured so that angular damping action of T2 is provided for any relative angular displacement of spring loader 6 and secondary flywheel mass 3. Preferably, damping unit T2 comprises a bushing interference fitted between spring loader 6 and secondary flywheel mass 3 to provide a friction coupling. It is important to note that friction torque of damping unit T2 is not dependent from angular speed and that other embodiments of damping devices that are not dependent from rotational speed may be provided, i.e. friction surfaces loaded along an axial direction by one or more resilient elements, the axial direction being parallel to the axis of rotation of secondary flywheel mass 3 with respect to primary flywheel mass 2.

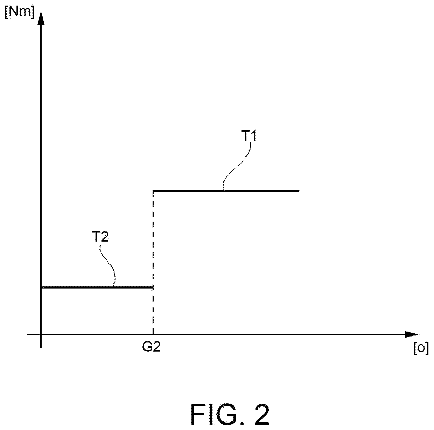

Therefore, torsional damping effect occurs when spring loader 6 and secondary mass 3 relatively angularly displace. Preferably, G1 is closed at a torque that is higher or equal to the one required to close gap G2 so that damping unit T2 is activated before or in the moment where coils springs 4 are loaded. Therefore, it is possible to provide a functioning condition, i.e. when relative angular displacement between spring loader 6 and secondary mass 3 is lower than G1, where damping level T2 is effective and compression coil springs 4 are not loaded. In particular, damping units T1 and T2 provide a respective constant level of damping so that, when gap G2 is closed, the overall damping torque between spring loader 6 and secondary flywheel mass 3 increases from a first level to a second level grater than the first level (see figure 2).

It is important to note that the overall friction torque generated by the centrifugal acceleration applied to compression coil springs 4 against the walls of the respective seats, is lower than the value at least of damping unit T1 for all rotation speed of the IC engine. This can be obtained by using short compression coil springs 4. According to an explanatory embodiment, each compression coil spring 4 has a mass of 10-50 grams. Furthermore, compression coil springs 4 are short enough to be housed in the respective seats and maintain a substantially straight axis. The seats are configured to hold compression coil springs 4 in place against the action of centrifugal acceleration and provide for press the springs when secondary flywheel mass 3 and spring loader 6 are loaded by a torque that closes gap G1. In an alternative example, maximum damping torque generated by centrifugal acceleration applied to compression coil spring 4 is lower than damping torque of damping units T1 and/or T2.

Therefore, according to a first example, an overall damping effect is provided which discontinuously changes the damping rate between spring loader 6 and secondary flywheel mass 3 between at least two values. The discontinuous damping rate is in particular obtained by providing gap G2.

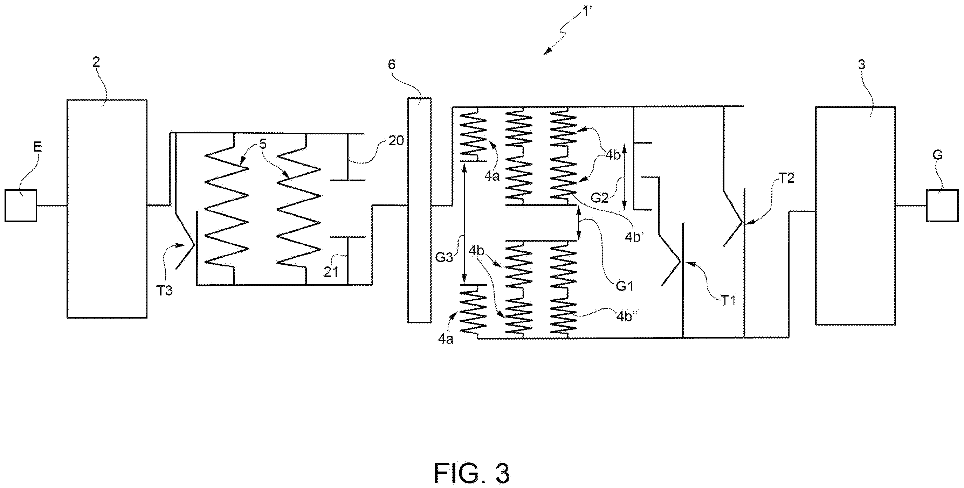

In addition, the angular rotation of resilient element 5 is preferably limited by two stops 20, 21 advantageously but not exclusively fixed with respect to the primary flywheel mass 2 and the spring loader 6 respectively. Stops 20, 21 may be hard stops or torsionally resilient stops in order to dissipate at least a portion of the impact energy. In particular, stops 20, 21 are designed so as to limit the torque load on decoupling spring unit 5. Preferably, such maximum torque is set at or below 140% of the maximum design torque of IC engine E identified by a wide open throttle condition. Even more preferably, the maximum torque loading decoupling spring unit 5 is set at or below 115% of the maximum design torque of IC engine E. Furthermore, overall maximum torque that can load compression coil springs 4 is higher than maximum torque loading decoupling spring unit 5. Preferably, maximum torque loading compression coil springs 4 is even 1.5 upto 4 times more of maximum torque of IC engine E. In an embodiment of the present invention illustrated in figure 3, the structure of flywheel 1 described above is modified in that compression coil springs 4 are arranged to provide a variable stiffness depending on the angular displacement of secondary flywheel mass 3 with respect to spring loader 6. In a preferred embodiment, compression coil springs 4 comprise a first and a second set of coil springs 4a and 4b arranged in parallel and having different spring rates. In particular, spring rate of spring set 4a converted into torsional stiffness is higher than spring rate converted in torsional stiffness of spring set 4b. A preferred way to achieve such an effect is to provide spring set 4b as a series of compression coil springs 4b' and 4b" each of which has a different linear spring rate so that the overall torsional stiffness is lower than the torsional stiffness of spring set 4a.

Furthermore, a circumferential gap G3 is provided to load compression spring set 4a and circumferential gap G1 is provided to load compression spring set 4b. Gap G1 is configured such to be closed at a torque that is lower than the torque required to closed gap G3. In addition, stops 20, 21 are configured so that at least gap G1 is closed at a torque that is lower than the torque required so that stop 20 abuts on stop 21.

As a mere explanatory embodiment, spring set 4b comprises two axially symmetrical series of a spring having linear stiffness 20 N/mm and 60 N/mm respectively, each set being spaced by gap G2 and providing after mounting a torsional stiffness of about 3 Nm/°.

Furthermore, spring set 4a comprises two axially symmetrical springs angularly spaced by gap G3 and having a linear stiffness of 220 N/mm each, which means after mounting and in combination with spring set 4b, i.e. when gaps G2 and G3 are closed, of about 80 Nm/°.

Furthermore, flywheels according to both examples may comprise a further damping device T3 in parallel to resilient element 5. The damping torque applied by damping device T3 is lower than the one applied by damping units T1 and T2. Preferably, damping torque of damping device T3 is in the range of 1 - 5 Nm, damping torque of damping unit T2 being more than 30 Nm.

In use, when engine E is accelerating from a medium-low range to a higher speed range, spiral spring of resilient element 5 decouples angular fluctuations of the crankshaft because it has a relatively low torsional stiffness and stops 20, 21 are not abutting for angles lower than 50°. In such condition, damping device T1, T2 is not effective or is effective to a limited extent so that decoupling is improved. This means that when stops 20, 21 are not abutting damping device T1, T2 applies a friction torque such that spring loader 6 is angularly fixed or has a limited dynamic behaviour with respect to secondary flywheel mass 3.

The drivetrain may also encounter torsional resonance conditions i.e. at starting of engine E or during load change. A load change normally occurs when, at high speed, the following are combined: IC engine is nearly idling, inertia forces of the drivetrain are high due to high speed and tend to overcome primary flywheel mass 2, torque on the flywheel is negative (a positive torque is when primary mass 2 drives secondary mass 3), and the user heavily presses accelerator pedal, so that torque on the flywheel switches to a positive and high value. In such a condition, the drivetrain is vibrating due to the backlash of the gears and is excited by the torque shock generated by the sudden switch from negative to positive torque.

When a torsional resonance occurs, the torque may reach a very high value even higher than the maximum torque of engine E and compression coil springs 4 and damping device T1, T2 start functioning because stops 20, 21 are abutting: a high torque is transferred to compression coil springs 4 by stops 20, 21 and torsional vibrations are damped by damping device T1, T2. Furthermore, compression coil springs 4 have a torsional stiffness such to resist a high torque peak occurring in the above functioning condition with a minimum angular displacement.

When the torsional stiffness of compression coil springs 4 is variable, an initially low stiffness of spring set 4b, even lower than the stiffness of spiral spring, is intended to gradually transfer the torque from resilient element 5 to spring set 4a having the higher stiffness and avoid heavy impacts. To this regards, gap G2 may close at a torque which is lower than that required so that stop 20 abuts stop 21.

The advantages of a dual mass flywheel according to the present invention are as follows.

A flywheel according to the present invention functions as a decoupler below a predefined torque limit and as a damper above such limit showing a good performance across the entire working range of the drivetrain. In particular, it is possible to optimize the design of each stage by adjusting stops 20, 21, gaps G2, G3 and stiffnesses of resilient element 5 and compression coil springs 4.

In particular, stops 20, 21 limit the maximum torque applied to decoupling spring unit 5 so that the latter can be optimized for the decoupling function during normal running of IC engine E where a positive torque is present or increases. Indeed, decoupling spring unit 5 has a lower spring rate than that of compression coil springs 4 and can store a maximum elastic energy correspondent to the maximum torque of IC engine C plus a minimum safety coefficient. In this way elastic energy stored is limited so as to decrease oscillation amplitudes and the energy associated when resonance or vibrating behaviour after load change occur.

In addition to decreasing the energy involved in conditions of vibrations, flywheel 1 is also in the condition to provide an efficient damping action. Indeed, the action of damping device T1, T2, which is always present when spring loader 6 and secondary flywheel mass 3 relatively rotate, can be adjusted to dampen torsional vibrations after load change. Furthermore, the torque applied to flywheel 1 is higher than the maximum torque of IC engine E because the latter is at full power and, in addition, the inertia tends to overload the drivetrain so that compression coil springs 4 effectively decrease vibration amplitude in view of the combination of higher spring rate and damping action from damping device T1, T2.

Furthermore, compression coil springs 4 can be designed to optimize overtorque conditions, i.e. starting of IC engine E or load change, so that a high spring rate and a predefined damping level by damping device T1, T2 can lower oscillation amplitudes and reduce negative impacts of torsional vibrations on the drivetrain. A torque acting on flywheel 1 may be higher than the maximum torque of IC engine E due to the inertia of the drivetrain or during torsional resonances of the crankshaft of IC engine E.

When a dual mass flywheel is provided with two resilient stages in series, the one attached to the primary flywheel mass having an overall torsional spring rate lower than the maximum one of the resilient stage attached to the secondary flywheel mass, decoupling performance is improved to avoid that heavy torsional fluctuations are transferred along the drivetrain downstream the crankshaft, i.e. gearbox G. In particular, such heavy fluctuations are not transferred to compression coil springs 4 improving the efficiency and the working life of the latter.

Furthermore, damping device T1, T2 is designed to be substantially independent from rotational speed, i.e. additional to friction of compression coil springs 4 on the respective housing cages due to centrifugal acceleration, so that a low damping, i.e. damping from damping device T2, acts in combination to torsionally resilient element 5 to optimize the decoupling function. In particular, low spring rate combined with low damping acting on resilient element 5 are important to achieve a good decoupling function e.g. when the IC engine is running at constant speed or is accelerating. Furthermore, a low damping level must be maintained throughout the widest possible range of rotational speed so that damping unit T2 is nearly independent from rotational speed. In particular at start of IC engine E, rotation speed is quite low so that compression coil springs 4 are not heavily influenced by centrifugal acceleration and the relative performance is not substantially impacted by radial friction of the compression coil springs 4 on the relative housing cages. Furthermore, load change occurs at high rotation speed and the fact that also the action of damping unit T1 is basically insensitive to rotation speed guarantees optimized damping performance through the whole functioning range of IC engine E.

Furthermore, by properly designing gap G2 of damping unit T1, the latter, if present, adds its contribution at a predetermined level of torsional fluctuation that can be optimized to efficiently dampen oscillation in resonance and load change conditions only so that in other conditions prevails the decoupling function of spring element 5. In particular, in resonance or load change, high damping preferably independent from rotational speed combined with high spring rate is needed. It is important to bear in mind also that friction torque associated to centrifugal acceleration applied to compression coil springs 4 is always lower at least of damping level of damping unit T1 for the whole speed functioning range of IC engine E. Friction torque associated to centrifugal acceleration applied to compression coil springs 4 may be calculated by numerical simulation of flywheel 1.

In addition, by properly adjusting gap G1 it is possible to lower overall spring rate of spring element 5 combined with compression coil springs 4 so that a lower first natural frequency of the flywheel is obtained. In this way, resonance occurs in a lower energy range and fluctuation amplitude decreases.

Ranges of the geometrical features when resilient element 5 is a spiral spring are directed to obtain the desired low stiffness or spring rate to dampen vibrations and, at the same time, a longer fatigue life.

Furthermore, the overall damping rate is variable between two discrete levels and adjustable to obtain a specific damping effect between spring loader 6 and secondary flywheel mass 3 when the former torsionally resonates.

Finally it is clear that modifications and variants may be made to the pulley assembly disclosed and shown herein without departing from the scope of protection defined by the appended claims.

Furthermore, resilient element 5 can comprise more than one spiral spring connected in parallel between said primary flywheel mass 2 and spring loader 6. Preferably, spiral springs have the same spring rate and/or shape and are angularly equispaced to achieve an improved rotational balancing. In particular, spiral springs are considered to be virtually insensitive to rotation speed as coils apart from end portions do not slide on surfaces along the radial direction and centrifugal forces do not transform into friction.

## Claims

1. Flywheel (1) comprising a primary flywheel mass (2) suitable for being connected to a crankshaft of an internal combustion engine; a secondary flywheel mass (3) rotatable with respect to said primary flywheel mass (2) ; a decoupling spring unit (5) coupled to said primary flywheel mass (2); a spring loader (6) coupled to said decoupling spring unit (5) so as to angularly displace with respect to said primary flywheel mass (2); and a plurality of compression coil springs (4) arranged circumferentially to be loaded/unloaded when said spring loader (6) and said secondary mass (3) angularly displace relative to each other so as to be in series with said decoupling spring unit (5), wherein said decoupling spring unit (5) comprises at least a spiral spring loaded / unloaded by the relative rotation of said primary flywheel mass (2) and said spring loader (6) and in that at least one of said plurality of coil springs (4) is compressable upon displacement of said spring loader (6) with respect to said second flywheel mass (3) to provide a first torsional stiffness that is higher than a second torsional stiffness of said spiral spring, said flywheel being such that at least a further one of said plurality of coil springs (4) is compressable upon displacement of said spring loader (6) with respect to said secondary flywheel mass (3) to provide a third torsional stiffness that is lower than said first torsional stiffness, so that said coil springs (4) provides for a variable torsional stiffness, **characterized in that** said at least one and said at least further coil spring (4) are in parallel, a first gap (G3) being provided before compressing said at least one coil spring and a second gap (G1) being provided before compressing said at least further coil spring (4), wherein said first gap (G3) is closable at a first torque and said second gap (G1) is closable at a second torque, said first torque being higher than said second torque.

2. Flywheel according to claim 1, **characterized in that** said further one of said plurality of coil springs (4) comprises a series of coil springs.

3. Flywheel according to any of the preceding claims, **characterized by** comprising stops (20, 21) between said primary flywheel mass (2) and spring loader (6) to angularly define the maximum torque transferrable to said decoupling spring unit (5), said maximum torque being lower than a further maximum torque transferable by said compression coil springs (4).

4. Flywheel according to claim 3, **characterized in that** said stops (20, 21) define a third gap that is closable at a third torque, said third torque being higher at least than said second torque.

5. Flywheel according to any of the preceding claims, **characterized by** comprising a damping device (T1, T2) mounted between said spring loader (6) and secondary flywheel mass (3) and configured to have at least a first level of damping (T2) substantially independent from rotational speed and acting whenever said spring loader (6) and secondary flywheel mass (3) respectively rotate.

6. Flywheel according to claim 5 **characterized in that** a friction torque generated by the centrifugal acceleration applied to said compression coil springs (4) is in addition to that of said damping device (T1, T2).

7. Flywheel according to any of claims 5 or 6, wherein said damping device (T1, T2) comprises either an interference fitted bushing and/or a friction element loaded along a direction parallel to the axis of rotation of said secondary flywheel mass (3) with respect to said primary flywheel mass (2) .

8. Flywheel according to any of claims 5 to 7, **characterized in that** a maximum friction torque by the centrifugal acceleration applicable to said coil springs (4) is less than one of said first level (T2) or a further maximum friction torque of said friction device (T1).

9. Flywheel according to claim 8, **characterized in that** said further maximum friction torque is higher than said at least first level of damping.

10. Flywheel according to any of claims 8 or 9, **characterized in that** said damping device (T1, T2) is configured so that the change between said at least first level of damping and said further maximum friction torque depends on a predetermined respective angular position between said spring loader (6) and secondary flywheel mass (3) .

11. Flywheel according to any of the preceding claims, **characterized in that** said compression coil springs (4), spring loader (6) and secondary flywheel mass (3) are arranged so that said compression coil springs (4) are loaded when the relative rotation between said spring loader (6) and secondary flywheel mass (3) reaches a predefined level (G1).

12. Flywheel according to any of the preceding claims, **characterized in that** said damping device comprises a first damping unit (T1) and a second damping unit (T2) in parallel between each other, a gap (G2) being interposed between said spring loader (6) and said first damping unit (T1) to define said predefined respective angular position.

13. Flywheel according to any of the preceding claims, wherein said spiral spring has volutes defining an angle comprised between 270° and 600°.

14. Flywheel according to any of the preceding claims, wherein said decoupling spring unit (5) comprises a spiral spring having a cross section height / width ratio comprised between 0.4 and 0.8.

15. Flywheel according to any of the preceding claims, wherein said decoupling spring unit (5) comprises a spiral spring having flat faces and fillet radius between the flat faces comprised between 1mm and 3mm.

16. Flywheel according to any of the preceding claims, **characterized by** comprising a second damping device (T3) activated by relative angular displacement of said first flywheel mass (2) and spring loader (6).

17. Engine unit comprising an internal combustion engine (E) a flywheel according to any of the preceding claims and a gearbox (G), wherein said primary flywheel mass (2) is connected to and driven in rotation by said engine (E) and said secondary flywheel mass (3) is selectively connectable to said gearbox (G).

18. Engine unit according to claim 17, **characterized in that** said stops (20, 21) are configured so that at least during start of said engine said primary flywheel mass (2) transfers to said spring loader (6) a higher load than the one of said decoupling spring unit (5).

19. Engine according to any one of claims 17 or 18 **characterized in that** maximum torque applicable to said decoupling spring unit (5) is lower than the maximum torque applicable to said compression coil springs (4).

## Patentansprüche

1. Schwungrad (1) mit einer primären Schwungradmasse (2), die geeignet ist, um mit einer Kurbelwelle eines Verbrennungsmotors verbunden zu werden; einer sekundären Schwungradmasse (3), die in Bezug auf die primäre Schwungradmasse (2) drehbar ist; einer Entkopplungsfedereinheit (5), die mit der primären Schwungradmasse (2) gekoppelt ist; einem Federlader (6), der mit der Entkopplungsfedereinheit (5) gekoppelt ist, um in Bezug auf die primäre Schwungradmasse (2) winkelmäßig verlagerbar zu sein; und einer Mehrzahl von Druckschraubenfedern (4), die umfänglich angeordnet sind, um belastet/entlastet zu werden, wenn der Federlader (6) und die sekundäre Masse (3) sich zueinander winkelmäßig verlagern, um in Reihe mit der Entkopplungsfedereinheit (5) zu stehen, wobei die Entkopplungsfedereinheit (5) wenigstens eine Spiralfeder umfasst, die durch die relative Drehung der primären Schwungradmasse (2) zu dem Federlader (6) belastet/entlastet wird und wobei die wenigstens eine der Mehrzahl von Schraubenfedern (4) komprimierbar ist bei einer Verlagerung des Federladers (6) in Bezug auf die sekundäre Schwungradmasse (3), um eine erste Torsionssteifigkeit vorzusehen, die höher ist als eine zweite Torsionssteifigkeit der Schraubenfeder, wobei das Schwungrad derart ausgelegt ist, dass wenigstens eine weitere der Mehrzahl von Schraubenfedern (4) komprimierbar ist bei einer Verlagerung des Federladers (6) in Bezug auf die sekundäre Schwungradmasse (3), um eine dritte Torsionssteifigkeit vorzusehen, die niedriger ist als diejenige der ersten Torsionssteifigkeit, sodass die Schraubenfedern (4) eine variable Torsionssteifigkeit liefern, **dadurch gekennzeichnet, dass** die wenigstens eine und die wenigstens eine weitere Schraubenfeder (4) parallel sind, ein erster Spalt (G3) vor dem Komprimieren der wenigstens einen Schraubenfeder vorgesehen ist und ein zweiter Spalt (G1) vorgesehen ist, bevor die wenigstens eine weitere Schraubenfeder (4) komprimiert wird, wobei der erste Spalt (G3) bei einem ersten Drehmoment schließbar ist und der zweite Spalt (G1) bei einem zweiten Drehmoment schließbar ist, wobei das erste Drehmoment größer als das zweite Drehmoment ist.

2. Schwungrad nach Anspruch 1, **dadurch gekennzeichnet, dass** die weitere der Mehrzahl von Schraubenfedern (4) eine Reihe von Schraubenfedern umfasst.

3. Schwungrad nach einem der vorstehenden Ansprüche, **dadurch gekennzeichnet, dass** es Anschläge (20, 21) zwischen der primären Schwungradmasse (2) und dem Federlader (6) umfasst, um winkelmäßig das maximale Drehmoment zu definieren, das an die Entkopplungsfedereinheit (5) übertragbar ist, wobei das maximale Drehmoment kleiner ist als ein weiteres maximales Drehmoment, das durch die Druckschraubenfedern (4) übertragbar ist.

4. Schwungrad nach Anspruch 3, **dadurch gekennzeichnet, dass** die Anschläge (20, 21) einen dritten Spalt definieren, der bei einem dritten Drehmoment schließbar ist, wobei das dritte Drehmoment größer ist als zumindest das zweite Drehmoment.

5. Schwungrad nach einem der vorstehenden Ansprüche, **dadurch gekennzeichnet, dass** es eine Dämpfervorrichtung (T1, T2) umfasset, die zwischen dem Federlader (6) und der sekundären Schwungradmasse (3) montiert und ausgestaltet ist, um wenigstens eine erste Stärke an Dämpfung (T2) im Wesentlichen unabhängig von der Drehzahl aufzuweisen und einwirkt, wann immer der Federlader (6) bzw. die sekundäre Schwungradmasse (3) sich drehen.

6. Schwungrad nach Anspruch 5, **dadurch gekennzeichnet, dass** ein Reibmoment, erzeugt durch die auf die Druckschraubenfedern (4) wirkende Zentrifugalbeschleunigung hinzu kommt zu dem der Dämpfervorrichtung (T1, T2).

7. Schwungrad nach einem der Ansprüche 5 oder 6, wobei die Dämpfervorrichtung (T1, T2) entweder eine Festpassbüchse und/oder ein Reibelement umfasst, das entlang einer Richtung parallel zu der Drehachse der sekundären Schwungradmasse (3) in Bezug auf die primäre Schwungradmasse (2) belastet wird.

8. Schwungrad nach einem der Ansprüche 5 bis 7, **dadurch gekennzeichnet, dass** ein durch die Zentrifugalbeschleunigung den Schraubenfedern (4) auferlegtes maximales Reibmoment kleiner ist als eines der ersten Stufe (T2) oder eines weiteren maximalen Reibmoments der Reibvorrichtung (T1).

9. Schwungrad nach Anspruch 8, **dadurch gekennzeichnet, dass** das weitere maximale Reibmoment größer ist als die wenigstens eine Stufe an Dämpfung.

10. Schwungrad nach einem der Ansprüche 8 oder 9, **dadurch gekennzeichnet, dass** die Dämpfervorrichtung (T1, T2) derart ausgestaltet ist, dass der Wechsel zwischen der wenigstens ersten Stufe an Dämpfung und dem weiteren maximalen Reibmoment abhängt von einer vorbestimmten jeweiligen Winkelposition zwischen dem Federlader (6) und der sekundären Schwungradmasse (3).

11. Schwungrad nach einem der vorstehenden Ansprüche, **dadurch gekennzeichnet, dass** die Druckschraubenfedern (4), der Federlader (6) und die sekundäre Schwungradmasse (3) derart angeordnet sind, dass die Druckschraubenfedern (4) belastet sind, wenn die relative Drehung zwischen dem Federlader (6) und der sekundären Schwungradmasse (3) eine vordefinierte Stufe (G1) erreicht.

12. Schwungrad nach einem vorstehenden Ansprüche, **dadurch gekennzeichnet, dass** die Dämpfervorrichtung eine erste Dämpfereinheit (T1) und eine zweite Dämpfereinheit (T2) umfasst, die parallel zueinander sind und wobei ein Spalt (G2) zwischen dem Federlader (6) und der ersten Dämpfereinheit (T1) angeordnet ist, um die vordefinierte jeweilige Winkelposition zu definieren.

13. Schwungrad nach einem der vorstehenden Ansprüche, wobei die Schraubenfeder Spiralen hat, die einen Winkel zwischen 270° und 600° definieren.

14. Schwungrad nach einem der vorstehenden Ansprüche, wobei die Entkopplungsfedereinheit (5) eine Schraubenfeder umfasst, die ein Querschnittshöhen-/breitenverhältnis zwischen 0,4 und 0,8 hat.

15. Schwungrad nach einem der vorstehenden Ansprüche, wobei die Entkopplungsfedereinheit (5) eine Schraubenfeder umfasst, die einen Flachkehl- und Kehlhalbmesser-Radius zwischen den Flachkehl-Flächen zwischen 1 mm und 3 mm umfasst.

16. Schwungrad nach einem der vorstehenden Ansprüche, **dadurch gekennzeichnet, dass** es eine zweite Dämpfervorrichtung (T3) umfasst, die aktiviert wird durch eine relative Winkelverlagerung von erster Schwungradmasse (2) und Federlader (6).

17. Motoreinheit mit einem Verbrennungsmotor (E), einem Schwungrad gemäß einem der vorstehenden Ansprüche und einem Getriebe (G), wobei die primäre Schwungradmasse (2) verbunden ist mit und drehend angetrieben wird von dem Motor (E) und die sekundäre Schwungradmasse (3) wahlweise mit dem Getriebe (G) verbindbar ist.

18. Motoreinheit nach Anspruch 17, **dadurch gekennzeichnet, dass** die Anschläge (20, 21) derart ausgestaltet sind, dass zumindest während des Anlassens des Motors die primäre Schwungradmasse (2) eine höhere Last an den Federlader (6) überträgt als die der Entkopplungsfedereinheit (5).

19. Motor nach einem der Ansprüche 17 oder 18, **dadurch gekennzeichnet, dass** das maximale der Entkopplungsfedereinheit (5) auferlegbare Drehmoment kleiner ist als das maximale den Druckschraubenfedern (4) auferlegbare Drehmoment.

## Revendications

1. Volant d'inertie (1) comprenant une masse d'inertie primaire (2) adaptée pour être connectée à un vilebrequin d'un moteur à combustion interne ; une masse d'inertie secondaire (3) pouvant tourner par rapport à ladite masse d'inertie primaire (2) ; une unité de ressort de découplage (5) couplée à ladite masse d'inertie primaire (2) ; un chargeur de ressort (6) couplé à ladite unité de ressort de découplage (5) de façon à se déplacer de manière angulaire par rapport à ladite masse d'inertie primaire (2) ; et une pluralité de ressorts hélicoïdaux de compression (4) agencés de manière circonférentielle pour être chargés/déchargés lorsque ledit chargeur de ressort (6) et ladite masse secondaire (3) se déplacent de manière angulaire l'un par rapport à l'autre de façon à être en série avec ladite unité de ressort de découplage (5), dans lequel ladite unité de ressort de découplage (5) comprend au moins un ressort spiral chargé/déchargé par la rotation relative de ladite masse d'inertie primaire (2) et dudit chargeur de ressort (6) et au moins un de ladite pluralité de ressorts hélicoïdaux (4) est compressible lors du déplacement dudit chargeur de ressort (6) par rapport à ladite seconde masse d'inertie (3) pour fournir une première résistance à la torsion qui est supérieure à une deuxième résistance à la torsion dudit ressort spiral, ledit volant d'inertie étant tel qu'au moins un autre de ladite pluralité de ressorts hélicoïdaux (4) est compressible lors du déplacement dudit chargeur de ressort (6) par rapport à ladite masse d'inertie secondaire (3) pour fournir une troisième résistance à la torsion qui est inférieure à ladite première résistance à la torsion, de sorte que lesdits ressorts hélicoïdaux (4) assurent une résistance à la torsion variable, **caractérisé en ce que** ledit au moins un et ledit au moins un autre ressort hélicoïdal (4) sont en parallèle, un premier espace (G3) étant fourni avant la compression dudit au moins un ressort hélicoïdal et un deuxième espace (G1) étant fourni avant la compression dudit au moins un autre ressort hélicoïdal (4), dans lequel ledit premier espace (G3) est fermable à un premier couple et ledit deuxième espace (G1) est fermable à un deuxième couple, ledit premier couple étant supérieure audit deuxième couple.

2. Volant d'inertie selon la revendication 1, **caractérisé en ce que** ledit un autre de ladite pluralité de ressorts hélicoïdaux (4) comprend une série de ressorts hélicoïdaux.

3. Volant d'inertie selon l'une quelconque des revendications précédentes, **caractérisé en ce qu'**il comprend des butées (20, 21) entre ladite masse d'inertie primaire (2) et le chargeur de ressort (6) afin de définir de manière angulaire le couple maximal transférable à ladite unité de ressort de découplage (5), ledit couple maximal étant inférieur à un autre couple maximal transférable par lesdits ressorts hélicoïdaux de compression (4).

4. Volant d'inertie selon la revendication 3, **caractérisé en ce que** lesdites butées (20, 21) définissent un troisième espace qui est fermable à un troisième couple, ledit troisième couple étant supérieur au moins audit deuxième couple.

5. Volant d'inertie selon l'une quelconque des revendications précédentes, **caractérisé en ce qu'**il comprend un dispositif d'amortissement (T1, T2) monté entre ledit chargeur de ressort (6) et la masse d'inertie secondaire (3) et configuré pour présenter au moins un premier niveau d'amortissement (T2) sensiblement indépendant de la vitesse de rotation et agissant lorsque ledit chargeur de ressort (6) et la masse d'inertie secondaire (3) tournent respectivement.

6. Volant d'inertie selon la revendication 5 **caractérisé en ce qu'**un couple de frottement généré par l'accélération centrifuge appliquée auxdits ressorts hélicoïdaux de compression (4) est en plus de celui dudit dispositif d'amortissement (T1, T2).

7. Volant d'inertie selon l'une quelconque des revendications 5 ou 6, dans lequel ledit dispositif d'amortissement (T1, T2) comprend une bague ajustée avec serrage et/ou un élément de frottement chargé le long d'une direction parallèle à l'axe de rotation de ladite masse d'inertie secondaire (3) par rapport à ladite masse d'inertie primaire (2).

8. Volant d'inertie selon l'une quelconque des revendications 5 à 7, **caractérisé en ce qu'**un couple de frottement maximal par l'accélération centrifuge applicable auxdits ressorts hélicoïdaux (4) est inférieur à l'un dudit premier niveau (T2) ou d'un autre couple de frottement maximal dudit dispositif de frottement (T1).

9. Volant d'inertie selon la revendication 8, **caractérisé en ce que** ledit autre couple de frottement maximal est supérieur audit au moins premier niveau d'amortissement.

10. Volant d'inertie selon l'une quelconque des revendications 8 ou 9, **caractérisé en ce que** ledit dispositif d'amortissement (T1, T2) est configuré de façon que le changement entre ledit au moins premier niveau d'amortissement et ledit autre couple de frottement maximal dépend d'une position angulaire respective prédéterminée entre ledit chargeur de ressort (6) et la masse d'inertie secondaire (3).

11. Volant d'inertie selon l'une quelconque des revendications précédentes, **caractérisé en ce que** lesdits ressorts hélicoïdaux de compression (4), le chargeur de ressort (6) et la masse d'inertie secondaire (4) sont agencés de façon que lesdits ressorts hélicoïdaux de compression (4) soient chargés lorsque la rotation relative entre ledit chargeur de ressort (6) et la masse d'inertie secondaire (3) atteint un niveau prédéfini (G1).

12. Volant d'inertie selon l'une quelconque des revendications précédentes, **caractérisé en ce que** ledit dispositif d'amortissement comprend une première unité d'amortissement (T1) et une seconde unité d'amortissement (T2) en parallèle entre elles, un espace (G2) étant interposé entre ledit chargeur de ressort (6) et ladite première unité d'amortissement (T1) pour définir ladite position angulaire respective prédéfinie.

13. Volant d'inertie selon l'une quelconque des revendications précédentes, dans lequel ledit ressort spiral présente des volutes définissant un angle compris entre 270° et 600°.

14. Volant d'inertie selon l'une quelconque des revendications précédentes, dans lequel ladite unité de ressort de découplage (5) comprend un ressort spiral présentant un rapport hauteur/largeur en coupe transversale compris entre 0,4 et 0,8.

15. Volant d'inertie selon l'une quelconque des revendications précédentes, dans lequel ladite unité de ressort de découplage (5) comprend un ressort spiral présentant des faces plates et un rayon de congé entre les faces plates compris entre 1 mm et 3 mm.

16. Volant d'inertie selon l'une quelconque des revendications précédentes, **caractérisé en ce qu'**il comprend un second dispositif d'amortissement (T3) activé par déplacement angulaire relatif de ladite masse d'inertie primaire (2) et du chargeur de ressort (6).

17. Groupe moteur comprenant un moteur à combustion interne (E), un volant d'inertie selon l'une quelconque des revendications précédentes et une boîte à engrenages (G), dans lequel ladite masse d'inertie primaire (2) est connectée à et entraînée en rotation par ledit moteur (E) et ladite masse d'inertie secondaire (3) est connectable sélectivement à ladite boîte à engrenages (G).

18. Groupe moteur selon la revendication 17, **caractérisé en ce que** lesdites butées (20, 21) sont configurées de façon qu'au moins pendant le démarrage dudit moteur ladite masse d'inertie primaire (2) transfère audit chargeur de ressort (6) une charge supérieure à celle de ladite unité de ressort de découplage (5).

19. Moteur selon l'une quelconque des revendications 17 ou 18 **caractérisé en ce que** le couple maximal applicable à ladite unité de ressort de découplage (5) est inférieur au couple maximal applicable auxdits ressorts hélicoïdaux de compression (4).
